# EUROPÄISCHE PATENTSCHRIFT

(11) **EP 1 940 541 B1**
(45) Veröffentlichungstag und Bekanntmachung des Hinweises auf die Patenterteilung: **12.08.2009**
(21) Anmeldenummer: 06807084.6
(22) Anmeldetag: 09.10.2006
(51) Int. Cl.: B01J 10/00, B01J 8/02, B01J 8/00

(54) **VERTEILERVORRICHTUNG FÜR EIN GAS-FLÜSSIGPHASENGEMISCH FÜR APPARATE**
DISTRIBUTION DEVICE FOR A GAS-LIQUID PHASE MIXTURE FOR APPARATUS
DISPOSITIF REPARTITEUR DE MELANGE DE PHASE GAZEUSE ET LIQUIDE POUR DES APPAREILS

(30) Priorität: 20.10.2005 DE 102005050284
(43) Veröffentlichungstag der Anmeldung: 09.07.2008
(73) Patentinhaber: BASF SE, 67056 Ludwigshafen (DE)
(72) Erfinder: GERLINGER, Wolfgang, 67117 Limburgerhof (DE); MATTKE, Torsten, 67251 Freinsheim (DE); BEY, Oliver, 67150 Niederkirchen (DE)
(74) Vertreter: Isenbruck, Günter
(86) Internationale Anmeldenummer: PCT/EP2006/067196
(87) Internationale Veröffentlichungsnummer: WO 2007/045574

(56) Entgegenhaltungen:
- WO-A-99/39815
- WO-A-99/46037
- WO-A-99/50235
- GB-A- 2 148 141
- US-A- 4 233 269
- US-A- 5 043 145
- US-A- 6 123 323
- US-B1- 6 175 040

## Beschreibung

Die Erfindung betrifft eine Verteilervorrichtung für ein Gas-Flüssigphasengemisch für Apparate zur gleichmäßigen Verteilung einer Gas- und einer Flüssigphase über den Querschnitt des Apparates.

Bei chemischen Prozessen ist es häufig erforderlich, eine Gas- und eine Flüssigphase, insbesondere in Form eines Gas-Flüssigphasengemisches, in einen Apparat über mindestens eine Zuführöffnung einzuleiten, deren hydraulischer Durchmesser im Vergleich zum hydraulischen Durchmesser des Apparates kleiner sein kann. Bedingt durch die hydraulischen Durchmesserverhältnisse und die damit einhergehenden Strömungsverhältnisse sowie dem herrschenden Dichteunterschied zwischen Gas- und Flüssigphase kommt es insbesondere zu einer ungleichmäßigen Verteilung der Gasphase über den Querschnitt des Apparates. Dies führt zu Problemen, vor allem wenn im Apparat ein kontinuierliches Festbett angeordnet ist, oder aber mit Feststoffpartikeln, beispielsweise Katalysatoren, gefüllte Kontaktrohre oder Spalten zwischen Thermoblechplatten vorhanden sind. Aber auch schon in der Zuführung kann es durch entsprechende Strömungsverhältnisse zu einer gewissen Trennung von Gas- und Flüssigphase oder auch zu einer ungleichförmigen Einleitung von Gas- und Flüssigphase kommen, die eine Vergleichmäßigung des Einleitungsstromes notwendig machen.

Darüber hinaus erweist sich das Zuführen eines zweiphasigen Gemisches und eine gleichmäßige Verteilung desselben über den Querschnitt des Apparates als problematisch, da durch eine Veränderung in der Gas-Flüssigverteilung oder in der Komponentenzusammensetzung in den zwei Phasen ein zusätzlicher Freiheitsgrad in dem zweiphasigen Gemisch vorliegt. So kann eine ungleichmäßige Verteilung der Phasen zu einer Verschiebung des Gleichgewichtes und somit zu einer lokalen Veränderung der Komponentenzusammensetzung der einzelnen Phasen führen. Beispielsweise kann es in den Randgebieten, die von der Gasphase nur unzureichend erreicht werden, zum Verdampfen einer Komponente aus der Flüssigphase kommen, so dass diese an dieser Komponente verarmt.

Apparate für chemische Reaktionen, in denen eine Gas- und eine Flüssigphase eingeleitet werden, weisen unter anderem einen zentralen, zylinderförmigen oder prismatischen Teil auf, in dem die chemische Reaktion stattfindet. Gegebenenfalls wird die chemische Reaktion katalysiert, wobei in dem Apparat ein kontinuierliches Festbett, mit Katalysatoren oder Katalysatorpartikeln gefüllte Kontaktrohre oder Thermoblechplatten mit dazwischen angeordneten Spalten vorgesehen ist. An beiden Enden ist der Apparat durch Deckel oder Böden geschlossen, die beispielsweise flach oder gewölbt, in Form von Klöpperböden, Korbbogenböden oder Kugelschalen ausgebildet sind.

Im Bereich eines unteren Bodens kann ein Gas-Flüssigphasengemisch über eine Zuführöffnung einer Zuführeinrichtung in den Apparat eingeleitet werden. Beim Eintreten des Gas-Flüssigphasengemisches durch die Zuführöffnung in den Innenraum des Apparates kann es dort durch Koaleszenz der Gasphase zur Ausbildung großer Gasblasen oder eines Gasstrahls kommen, die zentral aufsteigen und gegebenenfalls auf die Oberfläche eines Festbettes beziehungsweise eines Rohrbodens prallen, in dem die Kontaktrohre angeordnet sind. Im Gegensatz dazu werden die äußeren Bereiche des Apparats von der Gasphase nur unzureichend erreicht, wodurch es zu einer lokal veränderten Verteilung kommt. Unter Umständen findet zusätzlich ein Phasenübergang einer oder mehrerer Komponenten statt, und damit ergibt sich ein lokal verändertes Gleichgewicht. Dies bedingt in dem Apparat eine Uneinheitlichkeit in den Reaktionsbedingungen, wodurch die chemische Reaktion nicht optimal verläuft. Aber auch schon in der Zuführung kann es zu einer ungleichmäßigen Verteilung der beiden Phasen kommen. Darüber hinaus führen auch unterschiedlich große Gasblasen zu einer unerwünschten ungleichmäßigen Verteilung der beiden Phasen über den Apparatequerschnitt.

Um eine Vergleichmäßigung der Verteilung des Gas-Flüssigphasengemisches zu erzielen und um die beschriebenen Probleme zu vermeiden, ist es notwendig, Verteilervorrichtungen im Bereich der Zuführöffnung einzusetzen. In Anlehnung an Gasverteiler, die für eine Gleichmäßigkeit der Gasverteilung in einem Apparat mit kontinuierlicher flüssiger Phase, beispielsweise einer Blasensäule, eingesetzt werden, sind poröse Sinterplatten, Lochplatten und Siebböden bekannt. Wird eine Gasphase in den Apparat eingeleitet, erzeugen die Einbauten beispielsweise in Form von Lochplatten oder Sinterplatten aufgrund des Druckverlustes ein Aufstauen der Gasphase unterhalb der Platte, wodurch die Gasphase mit einer über den Querschnitt gleichmäßigen Durchströmung derselben zur Minimierung des Strömungswiderstandes reagiert. Hierdurch wird Gas in Flüssigkeit dispergiert, um große Phasengrenzflächen für den Wärme- und Stoffaustausch zu erzielen. Diese statischen, Druckverlust erzeugenden Einbauten überdecken einen weiten Querschnitt des Apparates, wodurch ein hoher Druckverlust zu verzeichnen ist, der die Betriebskosten erhöht. Derartige Einbauten erschweren bei einem Einsatz in Apparaten mit einem Festbett den Zugriff auf das dahinter liegende Festbett, der insbesondere notwendig sein kann, um im Falle eines Katalysatorfestbettes den verbrauchten Katalysator auszutauschen. Allerdings erweisen sich derartige Einbauten für Apparate, in denen beide Phasen einer Strömung unterworfen sind, als ungeeignet für eine Vergleichmäßigung.

Dagegen erzeugen diese Einbauten bei einem mehrphasigen Mehrkomponentensystem eine lokal veränderte Gas- Flüssigverteilung. Dieser instationäre Effekt kann eine Strömungsbewegung insbesondere der flüssigen Phase hervorrufen, die durch eine nicht horizontale Orientierung der Druckverlust erzeugenden Einbauten zu einer weiteren Separierung der beiden Phasen führt.

Als Verteilervorrichtung einer Gasphase sind ebenfalls Leitbleche bekannt, auf die ein Gasstrahl so auftrifft, dass er in einzelne Blasen bzw. Strahlen zerfällt. Allerdings ergibt sich damit bekanntermaßen für die gleichmäßige Verteilung eines Gas-Flüssigphasengemisches nur eine Minderung der genannten Problematik, aber keine Lösung derselben.

Ringverteiler, die in einem Rohrboden untergebracht sind und über eine Vielzahl von Zuführöffnungen zur Vergleichmäßigung einer Verteilung aufweisen, benötigen ein großes Einbauvolumen, da für eine gleichmäßige Verteilung mehrere Ringe mit einer großen Anzahl von Öffnungen notwendig sind. Als problematisch erweist sich, dass innerhalb der Ringverteiler eine einheitliche Strömung des Zweiphasengemisches gewährleistet sein muss, um keine Verschiebung der Gas-Flüssigverteilung zu erzeugen.

US 6,123,323 offenbart eine Verteilervorrichtung, die in einem einen gepackten Katalysator enthaltenden Apparatverwendet wird, wobei die Gasphase unterhalb der Verteilerplatte zu einem Gaspolster aufgestaut und die Flüssigphase durch einen Ringraum zwischen Rand der Verteilerplatte und Innenwand des Apparates strömt und die Gasphase durch die Durchgangsöffnungen in den oberhalb der Platte befindlichen Raum dispergiert wird.

WO 99/39815 beschreibt eine Verteilervorrichtung für einen Gas/Flüssig-Reaktor, wobei mehrere Verteilerplatten mit einem zackenförmigen Rand übereinander angeordnet *sind.*

Dem gegenüber war es Aufgabe der vorliegenden Erfindung, eine Verteilervorrichtung für eine Gas- und eine Flüssigphase, welche insbesondere als zweiphasiges Gemisch vorliegt, für einen Rohrbündelreaktor zur Verfügung zu stellen, um eine über den gesamten Querschnitt des Apparates gleichmäßige Verteilung zu erreichen, der die oben genannten Nachteile nicht aufweist. Insbesondere soll eine gleichförmige Verteilung über den gesamten Querschnitt des Apparates bei einer konstanten Zu sammensetzung der Phasen gewährleistet sein, wobei die Verteilervorrichtung konstruktiv einfach und entsprechend kostengünstig sein soll. Hierbei soll die Verteilervorrichtung für Rohrbündelapparate mit einer Vielzahl von Kontaktrohren, die in Rohrböden eingeschweißt und mit Katalysatorpartikeln gefüllt sind, geeignet sein.

Die Aufgabe wird gelöst durch die Merkmale von Anspruch 1.

Dementsprechend wird durch eine Verteilervorrichtung für ein Gas-Flüssigphasengemisch für einen Rohrbündelreaktor eine Gas- und eine Flüssigphase über mindestens eine Zuführöffnung in den Innenraum des Rohrbündelreaktors geleitet, wobei eine horizontal im Apparat angeordnete Verteilerplatte eine aktive Fläche mit Durchgangsöffnungen und einen sich nach unten erstreckenden Rand umfasst, wobei die Verteilerplatte sich nicht über den gesamten Querschnitt des Apparates erstreckt.

Die Verteilervorrichtung wird ergänzt durch eine zweite Verteilerplatte, welche zwischen Zuführöffnung und erster Verteilerplatte angeordnet ist, wobei die zweite Verteilerplatte eine aktive Fläche mit einer Vielzahl von Durchgangsöffnungen und einen sich nach unten erstreckenden Rand umfasst und weitgehend als Vorverteiler fungiert.

Erfindungsgemäße Rohrbündelapparate, in denen die Verteilervorrichtungen Verwendung finden, weisen eine Vielzahl von Kontaktrohren auf, die in Rohrböden eingeschweißt sind, wobei das Gas- Flüssigphasengemisch über mindestens eine Zuführöffnung in einer Haube zugeführt, durch die Kontaktrohre geleitet und über die andere Haube aus dem Apparat abgezogen wird.

Die bisher auftretende ungleichförmige Verteilung eines Zweiphasengemisches entsteht insbesondere dadurch, dass der hydraulische Durchmesser der Zuführöffnung um ein Vielfaches kleiner ist als der hydraulische Durchmesser des Apparates. Als "hydraulischer Durchmesser" wird in der Strömungstechnik das Verhältnis aus dem Vierfachen der Fläche zu dem Umfang einer Öffnung bezeichnet. Aufgrund des Dich teunterschieds zwischen Gasphase und Flüssigphase steigen die Gasblasen des Zweiphasengemisches schneller auf, beziehungsweise durch Koaleszenzverhalten an der Zuführöffnung kann es zur Ausbildung von großen Gasblasen oder eines Gasstrahles kommen, so dass die Gasphase mit hoher Geschwindigkeit weitgehend zentral aufsteigt. Aber auch durch eine beispielsweise gekrümmte Zuführleitung kann es schon dort zu einer Ausbildung von großen Gasblasen kommen, die bei der Zuführung in den Apparat zu den beschriebenen Problemen führen.

Die Funktionsweise der erfindungsgemäß eingesetzten Verteilervorrichtungen basiert auf einer Separierung der Gas- und der Flüssigphase an der Verteilervorrichtung. Es bildet sich ein Gaspolster in dem durch einen Rand begrenzten Raum unterhalb der Verteilerplatte derart aus, dass die Flüssigphase nicht durch die Durchgangsöffnungen der aktiven Fläche strömt. Vielmehr strömt die Flüssigphase seitlich an dem sich nach unten erstreckenden Rand der Verteilervorrichtung vorbei, durch den freien Ringraum zwischen Verteilervorrichtung und Innenwand des Apparates und verteilt sich oberhalb der Verteilerplatte über den gesamten Querschnitt des Apparates. Die Gasphase wird durch die Durchgangsöffnungen der Verteilerplatte gleichmäßig über den Verteilerquerschnitt in die Flüssigkeit dispergiert. Dadurch wird eine konstante Verteilung des zweiphasigen Mehrkomponentensystems über den Querschnitt des Verteilers erreicht.

Die Höhe des sich ausbildenden Gaspolsters stellt sich in Abhängigkeit von dem herrschenden Druckverlust der Gasströmung durch die Verteilerplatte, dem Druckverlust der Flüssigphase und dem hydrostatischen Druckunterschied von Gas und Flüssigkeit ein. Je nach Dichteunterschied zwischen Gas- und Flüssigphase, Gasvolumenstrom bzw. Lastfall und Anzahl und Durchmesser der Durchgangsöffnungen der Verteilerplatte stellt sich demnach eine Höhe des Gaspolsters ein, die sich stark unterscheiden kann.

Die Verteilerplatte wird nach Möglichkeit horizontal in dem Apparat angeordnet, wodurch das sich unterhalb der Verteilerplatte ausbildende Gaspolster eine konstante Höhe aufweist. Für eine möglichst exakte horizontale Ausrichtung der Verteilerplatte sind beispielsweise Laschen an der Innenwand des Apparates angeschweißt, über welche die Verteilervorrichtung verbunden werden kann. Aber auch eine Befestigung mit den in Strömungsrichtung folgenden Einbauten, beispielsweise einem Rohrboden, oder mit dem Deckel bzw. Boden des Apparates ist denkbar.

Die Anordnung der Verteilervorrichtungen bedingt, dass sich oberhalb der Verteilerplatte eine Strömung der Flüssigphase quer zur Aufstiegsrichtung der an den Durchgangsöffnungen der aktiven Fläche dispergierten Gasphase ausbilden kann. Um den Einfluss dieser Querströmung auf die Aufstiegsrichtung der dispergierten Gasblasen weitestgehend zu minimieren, wird in einer Ausführungsform der Erfindung eine möglichst geringe Strömungsgeschwindigkeit der Flüssigphase angestrebt. Dies wird erreicht, indem der Strömung der Flüssigphase eine große Fläche zur Verfügung gestellt wird. Der Querschnitt der Verteilerplatte wird so ausgewählt, dass einerseits möglichst der gesamte Querschnitt des Apparates von der an der Verteilervorrichtung dispergierten Gasphase beaufschlagt wird und andererseits die Strömungsgeschwindigkeit der Flüssigphase gering ist. Unter diesem Aspekt kann die Form der Verteilerplatte je nach Geometrie des Apparates kreisförmig, mehreckig oder jede andere beliebige Form aufweisen.

Der Abstand zwischen Verteilerplatte und möglichen Einbauten des Apparates, beispielsweise ein Rohrboden, ist so gewählt, dass eine Querströmung der Flüssigphase oberhalb der Verteilerplatte mit einer geringen Strömungsgeschwindigkeit möglich ist, und steht demnach in Abhängigkeit zum Stoffsystem und dem herrschenden Volumenstrom. Insbesondere gewährleistet dieser Abstand, dass sich die Verteilung zwischen Flüssig- und Gasphase über den Querschnitt des Apparates vergleichmäßigt.

Die Anzahl und die Anordnung der Durchgangsöffnungen in der aktiven Fläche der Verteilerplatte richten sich nach der Ausgestaltung des Apparates. Umfasst der Apparat Einrichtungen wie auf einem Halterost angeordnete Katalysatorpartikel eines Festbettes oder in einem Rohrboden eingeschweißte, mit Katalysatorpartikeln gefüllte Kontaktrohre, gewährleisten die erfindungsgemäßen Verteilervorrichtungen, dass der Querschnitt des Apparates gleichmäßig mit dem Zweiphasengemisch beaufschlagt ist. Die Durchgangsöffnungen der aktiven Fläche können je nach Einsatz unterschiedliche Formen, beispielsweise Löcher oder Schlitze, aufweisen und auch innerhalb der Verteilervorrichtung variiert werden. Im Fall eines als Rohrbündelreaktor ausgebildeten Apparates ist der Lochspiegel der aktiven Fläche der Verteilerplatte möglichst entsprechend dem Rohrspiegel der in dem Rohrboden eingeschweißten Kontaktrohre ausgerichtet, so dass eine Durchgangsöffnung der aktiven Fläche der Verteilerplatte unterhalb der Öffnung des Kontaktrohres angeordnet ist. In einer vorteilhaften Ausgestaltung des als Rohrbündelreaktor ausgebildeten Apparates ist vorgesehen, dass der Innendurchmesser der Kontaktrohre zwischen 25 und 300 mm, vorzugsweise zwischen 30 und 100 mm, insbesondere zwischen 40 und 70 mm gewählt wird. Der Durchmesser der Durchgangsöffnungen der aktiven Fläche der Verteilerplatte beträgt 0,5 bis 20 % des Innendurchmessers eines Kontaktrohres. Ein geeignetes Durchmesserverhältnis bestimmt sich aus der Notwendigkeit, dass sich ein ausreichendes Gaspolster bei dem herrschenden Volumenstromverhältnis ergibt, welches vorzugsweise in einem Bereich Gas- zu Flüssigvolumenstrom von 1:10 bis 10:1 liegt.

Die Höhe des sich nach unten erstreckenden Randes der Verteilervorrichtungen wird so gewählt, dass sich unabhängig von dem im Apparat herrschenden Lastfall eine ausreichende Höhe des Gaspolsters ausbildet. Somit ist gewährleistet, dass die Gasphase nur durch die Durchgangsöffnungen der Verteilerplatte dispergiert und nicht von der Flüssigphasenströmung mitgerissen wird. Mögliche Höhen des Randes liegen in einem Bereich von 0,01 bis 0,6 m, bevorzugt zwischen 0,05 und 0,25 m.

Sind die Verteilervorrichtungen in einer Haube angeordnet, die den Apparat abschließt, ist es vorteilhaft, den sich nach unten erstreckenden Rand durch leichtes Anschrägen der Kontur der Haube anzupassen, wodurch die Einbauhöhe reduziert wird.

Bei einigen Stoffsystemen kommt es zu keiner ausreichenden Separierung der Gas-und der Flüssigphase an der Verteilervorrichtung und somit zu der für die Funktionsweise der erfindungsgemäßen Verteilervorrichtung notwendigen Ausbildung eines über den Querschnitt des Verteilers konstanten Höhe des Gaspolsters. Auch ein ausgeprägtes Koaleszenzverhalten oder Ungleichmäßigkeiten in der Zuführung führen zu Instationaritäten in der Höhe des Gaspolsters, wodurch die Funktionsweise der Verteilervorrichtungen stark beeinträchtigt ist. Eine Verteilervorrichtung mit erfindungsgemäß zwei Verteilerplatten hat sich hierbei als vorteilhaft erwiesen. Eine zweite Verteilerplatte,

welche bevorzugt zentral zwischen Zuführöffnung und erster Verteilerplatte angeordnet ist, fungiert als Vorverteiler.

Dieser Vorverteiler dient zu einer ersten Vergleichmäßigung der aufsteigenden Gasphase, wobei eine einheitliche Größe der aufsteigenden Gasblasen über die Vorverteilerplatte nicht notwendig ist. Die Gasphase strömt sowohl durch die auf der aktiven Fläche der zweiten Verteilerplatte angeordneten Durchgangsöffnungen, als auch dispergiert in den vorbeiströmenden Flüssigphasenstrom.

Die zweite Verteilerplatte dieser Verteilervorrichtung kann einen kleineren Durchmesser als der Durchmesser der ersten Verteilerplatte aufweisen, wobei er vorzugsweise eine Größe aufweist, welche zwischen dem Durchmesser der Verteilerplatte und dem Durchmesser der Zuführöffnung liegt. Die Funktionsweise eines Vorverteilers ist vorwiegend darin zu sehen, eine erste Vergleichmäßigung der Gasphase vorzunehmen, unter anderem auch durch eine Zerteilung aufsteigender großer Gasblasen. Der Durchmesser der Durchgangsöffnungen der aktiven Fläche der zweiten Verteilerplatte werden so gewählt, dass die gesamte Öffnungsfläche, die sich aus der Anzahl der Öffnungen und dem Durchmesser der Öffnungen ergibt, um das 1,5 bis 3-fache größer ist als diejenigen der ersten Verteilerplatte.

Alternativ kann der Rand der als Vorverteiler fungierenden zweiten Verteilerplatte in einem gewissen Winkel zu dieser nach außen geneigt sein und ebenfalls mit Löchern versehen sein. Somit weist die zweite Verteilerplatte die Form eines Kegelstumpfmantels auf, wobei ein zentraler ebener Bereich und ein peripherer Bereich umfasst sind. Die Durchgangsöffnungen im zentralen und peripheren Bereich für den Gasdurchtritt sind hierbei nicht eingeschränkt. Sie können als Löcher, Schlitze oder andere Öffnungsformen ausgebildet sein. Die Durchgangsöffnungen im zentralen Bereich und im peripheren Bereich können unterschiedlich sein. Bevorzugt sind die Durchgangsöffnungen im peripheren Bereich größer als im zentralen Bereich, um ein Dispergieren der unter dem Vorverteiler aufgestauten Gasphase in die vorbeiströmende Flüssigphase zu fördern. Vorteilhaft werden Verteiler und Vorverteiler als eine vormontierte Einheit miteinander verbunden.

Der Vorverteiler kann aber auch als ein Ring ausgebildet sein, der an seinem Rand Zacken aufweist. Dieser kronenartige Vorverteiler bewirkt, dass die aufsteigenden Gasblasen an den Zacken zerteilt werden und vorverteilt aufsteigen.

Durch umfangreiche Untersuchungen konnte gefunden werden, dass sich das Problem einer Ungleichmäßigkeit in der Verteilung eines Gas-Flüssigphasengemisches über den Querschnitt eines Apparates in einfacher Weise durch die oben definierten Verteilervorrichtungen lösen lässt, wodurch Ungleichmäßigkeiten über den Querschnitt des Apparates sowohl bezüglich der Gasphase als auch bezüglich der Zusammensetzung der Phasen vermieden werden.

Die Erfindung wird im Folgenden anhand der Zeichnung näher erläutert.

Es zeigt im Einzelnen:
- Figur 1: einen Längsschnitt durch einen als Rohrbündelreaktor ausgebildeten Apparat mit einer Verteilervorrichtung in der unteren Haube;
- Figur 2: einen Querschnitt durch einen als Rohrbündelreaktor ausgebildeten Apparat mit einer darunter liegenden Verteilervorrichtung;
- Figur 3: einen Längsschnitt durch einen Apparat mit einer Ausführungsform einer erfindungsgemäß eingesetzten Verteilervorrichtung mit einem Vorverteiler;
- Figur 4: eine alternative Ausgestaltung der zweiten, als Vorverteiler fungierenden Verteilerplatte;

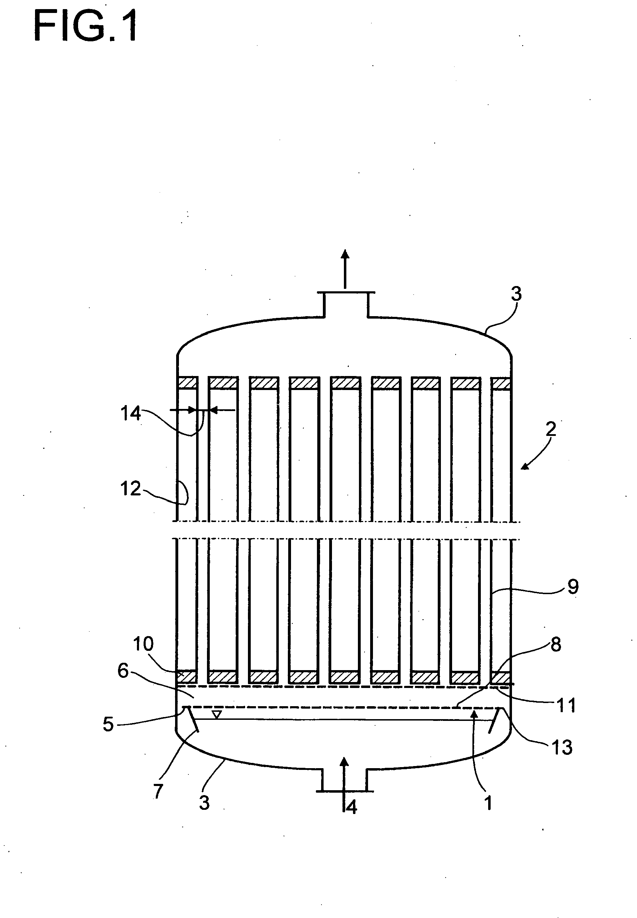

Die Längsschnittdarstellung in Figur 1 zeigt einen Apparat 2 mit zentralem zylindrischem Teil, der an beiden Enden durch je eine halbkugelförmige Haube 3 abgeschlossen ist. Über eine Zuführöffnung 4, die in der in Figur 1 dargestellten Ausführungsform beispielhaft in der unteren Haube 3 zentral angeordnet ist, wird ein Gas-Flüssigphasengemisch in den Apparat 2 in dessen untere Haube 3 eingeleitet und über eine Verteilervorrichtung 1 gleichmäßig verteilt. Die Verteilervorrichtung 1 umfasst eine Verteilerplatte 5 mit einer aktiven Fläche 6 und einen Rand 7, der sich in Richtung Zuführöffnung 4 erstreckt. Die aktive Fläche 6, welche über der Zuführöffnung 4 angeordnet ist, hat einen kreisförmigen oder mehreckigen Querschnitt und ist mit Durchgangsöffnungen 8 versehen, durch die die aufgestaute Gasphase dispergiert.

Der sich nach unten in Richtung Zuführöffnung 4 erstreckende Rand 7 kann gegenüber der ebenen aktiven Fläche 6 in einem Winkel geneigt sein, so dass der Rand 7 die

Form eines Kegelstumpfmantels bildet. Hierdurch passt sich der Rand 7 der Kontur der Haube 3 an, womit sich die Höhe der Haube 3 verringert.

In der Figur 1 ist der Apparat 2 als Rohrbündelreaktor ausgebildet, mit einem zentralen zylindrischen Teil, in dem Kontaktrohre 9 in Rohrböden 10 angeordnet sind. Unterhalb des unteren Rohrbodens 10 ist beispielsweise ein Halterost 11 angeordnet. Die Verteilervorrichtung 1 ist derart in dem Apparat 2 angeordnet, dass ein Abstand zwischen der Verteilerplatte 5 und dem unteren Rohrboden 10 besteht, so dass eine Strömung der Flüssigphase quer zur aktiven Fläche 6 mit einer geringen Geschwindigkeit herrscht. Durch diese Querströmung werden die durch die Durchgangsöffnungen 8 der aktiven Fläche 6 der Verteilervorrichtung 1 dispergierten Gasblasen nicht abgelenkt und steigen weitgehend senkrecht zur aktiven Fläche 6 auf.

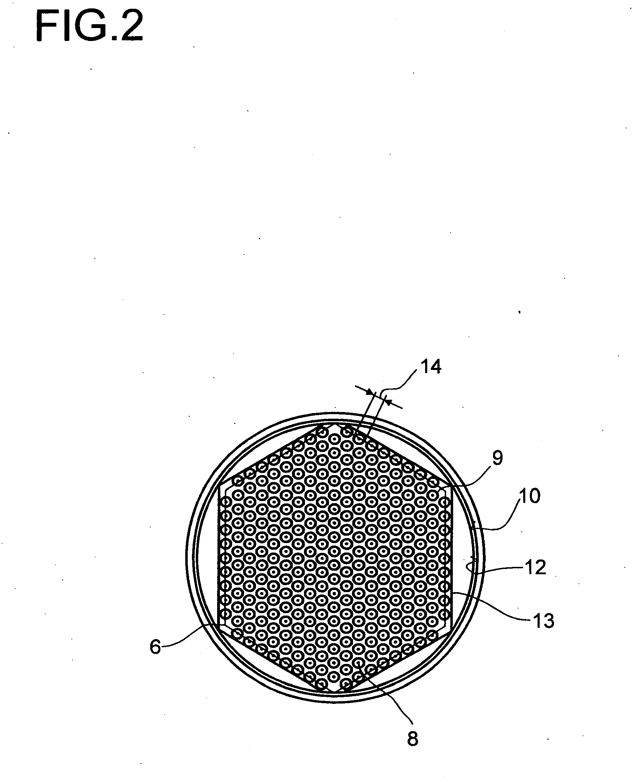

Figur 2 zeigt einen Querschnitt durch einen als Rohrbündelreaktor ausgebildeten Apparat 2 mit einer im unteren Bereich des Apparates angeordneten Verteilervorrichtung1. Die aktive Fläche 6 der Verteilerplatte 5 hat einen polygonalen Querschnitt, wodurch der Flüssigphase im peripheren Bereich zwischen Innenwand des Apparates 12 und Rand der Verteilerplatte 13 ein großer Strömungsquerschnitt zur Verfügung steht.

In Figur 2 ist der Rohrspiegel der Kontaktrohre 9 eines Rohrbündelreaktors verdeutlicht. Die Kontaktrohre 9 sind über den Querschnitt des Apparates 2 gleichmäßig verteilt und haben einen Innendurchmesser 14, der bevorzugt im Bereich zwischen 30 und 100 mm liegt. Zentral unterhalb eines jeden Kontaktrohres 9 befindet sich eine Durchgangsöffnung 8 der Verteilerplatte 5, die ein Öffnungsverhältnis zum Kontaktrohr in einem Bereich zwischen 0,5 und 20 % aufweist.

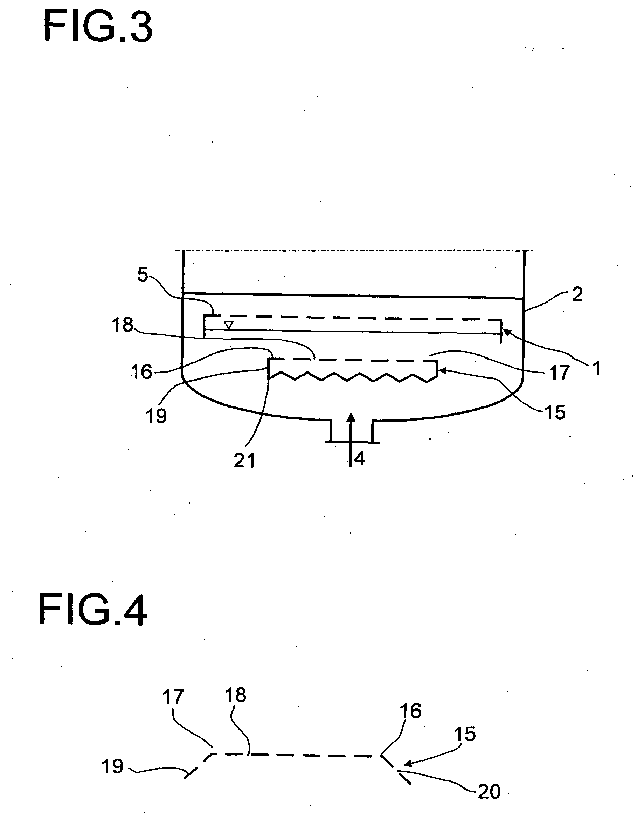

Figur 3 zeigt eine Verteilervorrichtung 1 mit einem Vorverteiler 15, der unterhalb einer ersten Verteilerplatte 5 in Richtung der Zuführöffnung 4 angeordnet ist. Der Vorverteiler 15 umfasst eine Verteilerplatte 16, welche einen geringeren Durchmesser als die erste Verteilerplatte 5 aufweist, mit einer aktiven Fläche 17 und Durchgangsöffnungen 18. Von der Verteilerplatte 16 erstreckt sich ein Rand 19 nach unten in Richtung der Zuführöffnung 4. Der Rand 19 kann sich senkrecht zur Verteilerplatte 16 nach unten erstrecken oder in einem Winkel zu dieser stehen.

Die in Figur 3 dargestellte Verteilervorrichtung findet insbesondere Einsatz bei Stoffsystemen, bei denen es zur Ausbildung von großen Gasblasen an der Zuführöffnung 4 kommen kann, die Instationaritäten in dem Gaspolster unterhalb der Verteilerplatte 5 hervorrufen.

In Figur 4 bildet der Rand 19 einen Winkel zu der Verteilerplatte 16, wodurch sich für den Vorverteiler 15 die Form eines Kegelstumpfmantels ergibt. Hierbei sind in dem geneigten Rand 19 Perforationen 20 vorgesehen, durch die die Gasphase zusätzlich zu den Durchgangsöffnungen 18 der aktiven Fläche 17 dispergiert.

Der Rand 19 kann einen glatten Randbereich 21 oder eine Vielzahl daran befindlicher Zacken aufweisen, an denen die Gasphase in die vorbeiströmende Flüssigphase dispergiert.

## Patentansprüche

1. Rohrbündelreaktor (2) mit Kontaktrohren (9), die in Rohrböden (10) eingeschweißt sind und in einem zylinderförmigen Teil des Apparates (2) angeordnet sind, der an seinem unteren und seinem oberen Ende jeweils von einer Haube (3) abgeschlossen ist, wobei ein Gas-Flüssigphasengemisch über eine Zuführöffnung (4) in der unteren Haube (3) zugeführt und über die obere Haube (3) aus dem Reaktor abgeführt wird mit einer unterhalb des untersten Rohrbodens angeordneten Verteilervorrichtung (1) für das Gas-Flüssigphasengemisch umfassend eine horizontal in dem Apparat (2) angeordnete Verteilerplatte (5) mit einer aktiven Fläche (6) mit Durchgangsöffnungen (8) und einen sich nach unten erstreckenden Rand (7), wobei die horizontal in dem Apparat (2) angeordnete Verteilerplatte (5) sich nicht über den gesamten Querschnitt des Apparates (2) erstreckt, und unterhalb der Verteilerplatte (5) einen Vorverteiler (15) mit einer zweiten Verteilerplatte (16) zwischen Zuführöffnung (4) und erster Verteilerplatte (5), wobei die zweite Verteilerplatte (16) eine aktive Fläche (17) mit Durchgangsöffnungen (18) und einen sich nach unten erstreckenden Rand (19) umfasst

2. Rohrbündelreaktor (2) nach Anspruch 1, **dadurch gekennzeichnet, dass** die Verteilerplatte (5) einen kreisförmigen oder polygonalen Querschnitt aufweist.

3. Rohrbündelreaktor (2) nach einem der Ansprüche 1 oder 2, **dadurch gekennzeichnet, dass** unterhalb der Verteilerplatte (5) ein Vorverteiler (15) mit einem Rand (19) mit zackenförmigem Randbereich (21) angeordnet ist.

4. Rohrbündelreaktor (2) nach einem der Ansprüche 1 bis 3, **dadurch gekennzeichnet, dass** die zweite Verteilerplatte (16) des Vorverteilers (15) eine gesamte Öffnungsfläche, bestimmt aus Anzahl und Querschnittsfläche der Öffnungen, aufweist, welche um das 1,5- bis 3-fache größer ist als die entsprechende Öffnungsfläche der Verteilerplatte (5).

5. Rohrbündelreaktor (2) nach einem der Ansprüche 1 bis 4, **dadurch gekennzeichnet, dass** der Rand (19) der zweiten Verteilerplatte (16) sich in einem Winkel größer als 90° relativ zu der zweiten Verteilerplatte (16) erstreckt.

6. Rohrbündelreaktor (2) nach Anspruch 5, **dadurch gekennzeichnet, dass** Durchgangsöffnungen in der zweiten Verteilerplatte (16) und in dem Rand (19) angeordnet sind, die die Form von Schlitzen, Löchern und/oder andere Formen haben.

7. Rohrbündelreaktor (2) nach einem der Ansprüche 1 bis 6, **dadurch gekennzeichnet, dass** die Verteilerplatte (5) im Abstand von 0,01 bis 0,4 m zu einem Halterost (11) für das Katalysatorfestbett angeordnet ist.

8. Rohrbündelreaktor (2) nach einem der Ansprüche 1 bis 7, **dadurch gekennzeichnet, dass** die Anzahl und die Anordnung der Durchgangsöffnungen (8) der aktiven Fläche (6) der Verteilerplatte (5) der Verteilervorrichtung (1) dem Rohrspiegel der Kontaktrohre (9) im Rohrboden (10) entspricht.

## Claims

1. A shell-and-tube reactor (2) having contact tubes (9) which are welded into tube plates (10) and are located in a cylindrical part of the apparatus (2) which is closed off at its upper end and its lower end by a cap (3), where a gas phase/liquid phase mixture is fed via a feed opening (4) into the lower cap (3) and discharged via the upper cap (3) from the reactor, having a distributor device (1) for the gas phase/liquid phase mixture which is arranged below the bottommost tube plate and comprises a distributor plate (5) which is arranged horizontally in the apparatus (2) and has an active area (6) with through-openings (8) and a downward-extending margin (7), where the distributor plate (5) arranged horizontally in the apparatus (2) does not extend over the entire cross section of the apparatus (2) and a predistributor (15) having a second distributor plate (16) between the feed opening (4) and first distributor plate (5) is arranged below the distributor plate (5) and the second distributor plate (16) comprises an active area (17) with through-openings (18) and a downward-extending margin (19).

2. The shell-and-tube reactor (2) according to claim 1, wherein the distributor plate (5) has a circular or polygonal cross section.

3. The shell-and-tube reactor (2) according to either claim 1 or 2, wherein a predistributor (15) having a margin (19) having a zig-zag edge region (21) is arranged below the distributor plate (5).

4. The shell-and-tube reactor (2) according to any of claims 1 to 3, wherein the second distributor plate (16) of the predistributor (15) has a total area of the openings, determined from the number and cross-sectional area of the openings, which is from 1.5 to 3 times the corresponding area of the openings of the distributor plate (5).

5. The shell-and-tube reactor (2) according to any of claims 1 to 4, wherein the margin (19) of the second distributor plate (16) extends at an angle of greater than 90° relative to the second distributor plate (16).

6. The shell-and-tube reactor (2) according to claim 5, wherein through-openings having the shape of slits, holes and/or other shapes are arranged in the second distributor plate (16) and in the margin (19).

7. The shell-and-tube reactor (2) according to any of claims 1 to 6, wherein the distributor plate (5) is arranged at a distance of from 0.01 to 0.4 m from a support grating (11) for the catalyst fixed bed.

8. The shell-and-tube reactor (2) according to any of claims 1 to 7, wherein the number and arrangement of the through-openings (8) of the active area (6) of the distributor plate (5) of the distributor device (1) corresponds to the plane of the contact tubes (9) in the tube plate (10).

## Revendications

1. Réacteur à faisceau tubulaire (2) doté de tubes de contact (9) intégrés dans des fonds de tubes (10) par soudure et disposés dans une partie cylindrique de l'appareil (2), ce dernier étant fermé à chacune de ses extrémités supérieure et inférieure par une cloche (3), un mélange de phases gazeuse/liquide étant introduit à travers une entrée (4) dans la cloche inférieure (3) et évacué du réacteur à travers la cloche supérieure (3), un dispositif de distribution (1) étant disposé en-dessous du fond de tubes inférieur et destiné audit mélange de phases gazeuse/liquide, ledit dispositif comprenant une plaque de distribution (5) disposée horizontalement au sein de l'appareil (2) et dotée d'une surface active (6) avec orifices de passage (8) et d'un bord (7) s'étendant vers le bas, la plaque de distribution (5) disposée horizontalement au sein de l'appareil (2) ne s'étendant pas sur l'intégralité de la coupe transversale de l'appareil (2), et un dispositif de pré-distribution (15) situé en-dessous de la plaque de distribution (5) et doté d'une deuxième plaque de distribution (16) située entre l'entrée (4) et la première plaque de distribution (5), la deuxième plaque de distribution (16) comprenant une surface active (17) avec orifices de passage (18) et un bord (19) s'étendant vers le bas.

2. Réacteur à faisceau tubulaire (2) selon la revendication 1, **caractérisé en ce que** la plaque de distribution (5) a une coupe transversale circulaire ou polygonale.

3. Réacteur à faisceau tubulaire (2) selon l'une des revendications 1 ou 2, **caractérisé en ce qu'**un dispositif de pré-distribution (15) doté d'un bord (19) avec une zone périphérique (21) de forme de dentée est disposé sous la plaque de distribution (5).

4. Réacteur à faisceau tubulaire (2) selon l'une des revendications 1 à 3, **caractérisé en ce que** la deuxième plaque de distribution (16) du dispositif de pré-distribution (15) dispose d'une surface d'ouverture totale, déterminée à partir du nombre et de la surface de section transversale des ouvertures, qui est supérieure d'un facteur compris entre 1,5 et 3 à la surface d'ouverture correspondante de la plaque de distribution (5).

5. Réacteur à faisceau tubulaire (2) selon l'une des revendications 1 à 4, **caractérisé en ce que** le bord (19) de la deuxième plaque de distribution (16) s'étend dans un angle supérieur à 90° par rapport à la deuxième plaque de distribution (16).

6. Réacteur à faisceau tubulaire (2) selon la revendication 5, **caractérisé en ce que** les orifices de passage disposés dans la deuxième plaque de distribution (16) et dans le bord (19) ont la forme de fentes, de trous et/ou d'autres formes.

7. Réacteur à faisceau tubulaire (2) selon l'une des revendications 1 à 6, **caractérisé en ce que** la plaque de distribution (5) est disposée à une distance comprise entre 0,01 et 0,4 m d'une grille de support (11) destinée au lit fixe de catalyseur.

8. Réacteur à faisceau tubulaire (2) selon l'une des revendications 1 à 7, **caractérisé en ce que** le nombre et la disposition des orifices de passage (8) de la surface active (6) de la plaque de distribution (5) du dispositif de distribution (1) correspondent à la plaque tubulaire des tubes de contact (9) dans le fond de tubes (10).
